# FASCICULE DE BREVET EUROPEEN

(11) **EP 3 983 697 B1**
(45) Date de publication et mention de la délivrance du brevet: **09.10.2024**
(21) Numéro de dépôt: 20730668.9
(22) Date de dépôt: 11.06.2020
(51) Int. Cl.: F16G 11/04, B64D 1/22, B66D 1/28, G01S 7/521, G10K 11/00

(54) **DISPOSITIF DE VERROUILLAGE D'UN OBJET LE LONG D'UN CABLE**
VORRICHTUNG ZUM VERRIEGELN EINES GEGENSTANDES ENTLANG EINES KABELS
DEVICE FOR LOCKING AN OBJECT ALONG A CABLE

(30) Priorité: 13.06.2019 FR 1906285
(43) Date de publication de la demande: 20.04.2022
(73) Titulaire: THALES, 92190 Meudon (FR)
(72) Inventeur: THOMAS, Philippe, 29238 BREST (FR); WARNAN, François, 29238 BREST (FR)
(74) Mandataire: Atout PI Laplace
(86) Numéro de dépôt international: PCT/EP2020/066162
(87) Numéro de publication internationale: WO 2020/249655

(56) Documents cités:
- WO-A1-91/02179
- WO-A1-96/21114
- DE-A1- 4 425 157
- FR-A- 1 287 517
- US-A1- 2014 264 209

## Description

La présente invention concerne un dispositif de verrouillage d'un objet le long d'un câble. L'invention permet de positionner l'objet à différentes positions le long du câble. L'invention trouve une utilité particulière dans le domaine de la détection sonar et plus précisément pour un sonar aéroporté souvent appelé "sonar trempé" ou « dipping sonar » dans la littérature anglo-saxonne. Ce domaine particulier consiste à immerger, depuis un hélicoptère ou un drone, une antenne sonar à une profondeur souhaitée.

Dans le cadre d'activités de lutte anti sous-marine, pour pouvoir détecter des sous-marins en immersion dans une zone donnée, on a généralement recours à l'utilisation de sonars, en particulier de sonars actifs. Dans ce contexte, le déploiement de sonars à partir de plateformes aériennes, hélicoptères ou drone, s'avère particulièrement efficace car de telles plateformes présentent une grande mobilité par rapport aux sous-marins.

Plus précisément, des hélicoptères sont utilisés pour mettre en oeuvre des émetteurs et récepteurs sonars reliés par un câble à leur plateforme, autrement dit à l'hélicoptère. On parle alors de "Sonars trempés". Par la suite, le sous-ensemble immergé et relié par le câble est appelé antenne. Il comprend les émetteurs et les récepteurs sonars proprement dits et éventuellement des équipements électroniques associés aux émetteurs et récepteurs. Il peut comprendre également des capteurs d'environnement.

De façon plus générale, l'invention s'intéresse à tout objet que l'on souhaite déplacer et immobiliser le long d'un câble, le câble étant accroché à un point fixe, par exemple à un porteur. Le câble peut s'étendre dans n'importe quelle direction. En particulier, le câble peut s'étendre horizontalement et l'objet peut être pendu par gravité au câble. L'objet peut évoluer dans n'importe quel milieu, notamment dans l'air ou dans l'eau. Des dispositifs destinés à serrer des cables sont connus des documents WO96/21114A ou DE4425157A.

Pour revenir aux sonars trempés, de façon connue, la mise à l'eau depuis la plateforme, le contrôle en immersion ainsi que la récupération à bord de ces antennes sont effectués au moyen d'un treuil situé à l'intérieur de l'hélicoptère. Le câble est fixé à l'antenne et le réglage de la profondeur d'immersion est réalisé en enroulant ou en déroulant le câble à partir de l'hélicoptère.

Lors de la descente et de la remontée de l'antenne au moyen du treuil, le câble génère une trainée importante dans l'eau. Cette trainée augmente avec la profondeur atteinte par l'antenne du fait de la longueur de câble déroulée. La vitesse de descente et de remontée de l'antenne est ainsi limitée par la trainée générée par le mouvement du câble. Plus la profondeur est importante, plus la vitesse doit être réduite en descente car l'antenne n'est entrainée vers le fond que par son poids réduit de sa propre trainée et de celle du câble. A la remontée, le treuil doit exercer sur le câble un effort égal au poids de l'antenne augmenté de la trainée globale. Il serait possible de prévoir un treuil capable de supporter une trainée importante. Le câble doit être dimensionné pour résister à l'effort de traction exercé par le treuil. Plus cet effort est important plus la section du câble doit être augmentée ce qui tend encore à augmenter la trainée.

Afin de limiter la trainée du câble lors de ses mouvements dans l'eau, la demanderesse a exploré la possibilité de disposer le treuil à l'intérieur de l'antenne. Se pose alors le problème du verrouillage de la position de l'antenne le long du câble. Le treuil disposé à l'intérieur de l'antenne peut aisément assurer cette fonction au moyen d'un frein permettant de bloquer l'actionneur du treuil. L'utilisation de l'actionneur du treuil pour assurer le verrouillage de la position de l'antenne le long du câble peut être compliquée à mettre en oeuvre et il peut être préférable de dissocier le verrouillage de la position de l'antenne le long du câble et l'actionneur du treuil.

A cet effet, l'invention propose une pince très simple à mettre en oeuvre. Dans une position ouverte de la pince, le câble la traverse. Dans une position fermée de la pince, celle-ci bloque la circulation du câble.

Plus précisément, l'invention a pour objet un dispositif de verrouillage d'un objet pouvant coulisser le long d'un câble, le dispositif comprenant le câble et une pince, le câble traversant la pince en s'étendant selon un axe, la pince comprenant : une partie fixe reliée à l'objet par une liaison à au moins un degré de liberté en translation selon l'axe, un anneau comprenant un matériau élastique à comportement fluide, l'anneau comprenant un évidement central traversé par le câble, un actionneur configuré pour compresser l'anneau entre deux formes, de façon à passer d'une première des formes, appelée forme ouverte, le câble pouvant circuler librement dans l'évidement central à une seconde des deux formes, appelée forme fermée, le câble étant comprimé par l'anneau.

La partie fixe de la pince est avantageusement reliée à l'objet au moyen d'au moins un élément élastique.

L'élément élastique est avantageusement configuré pour permettre une souplesse de la partie fixe par rapport à l'objet en translation selon l'axe et également selon les autres degrés de liberté.

L'élément élastique est avantageusement configuré pour transformer une majeure partie d'énergie cinétique de l'objet en énergie potentielle dans la déformation du ressort.

L'élément élastique présente avantageusement des propriétés d'amortissement permettant de dissiper l'énergie potentielle issue de l'énergie cinétique de l'objet.

L'actionneur exerce sur l'anneau un effort avantageusement orienté selon l'axe du câble.

Le dispositif peut comprendre une rondelle rigide solidaire de la partie fixe et traversée par le câble, l'anneau prenant appui contre une face de la rondelle, la face étant perpendiculaire à l'axe du câble, l'anneau étant compressé entre la rondelle et l'actionneur.

La face de la rondelle est appelée première face. La rondelle possède une seconde face opposée à la première face. La seconde face est avantageusement chanfreinée autour d'un perçage de la rondelle traversé par le câble.

Avantageusement, l'actionneur déplace l'anneau selon l'axe du câble en direction de la rondelle pour atteindre la forme fermée et en direction opposée à la rondelle pour atteindre la forme ouverte.

L'actionneur comprend avantageusement un système vis écrou dont une partie fixe est solidaire de la partie fixe de la pince et dont une partie mobile est configurée pour compresser l'anneau.

Le dispositif de verrouillage comprend avantageusement un tube rigide s'étendant selon l'axe du câble, l'anneau étant disposé à l'intérieur du tube, le tube permettant de limiter l'expansion de l'anneau radialement autour de l'axe du câble.

Le tube est avantageusement solidaire de la rondelle.

La rondelle est appelée première rondelle. Le dispositif comprend avantageusement une seconde rondelle traversée par le câble et interposée entre l'actionneur et l'anneau.

Les deux rondelles possèdent des perçages centrés autour de l'axe et traversés par le câble. Dans sa forme ouverte, l'évidement central possède avantageusement une section perpendiculaire à l'axe constante le long de l'axe, les sections des perçages ayant avantageusement des dimensions plus faibles que celles de la section de l'évidement central.

L'invention sera mieux comprise et d'autres avantages apparaîtront à la lecture de la description détaillée d'un mode de réalisation donné à titre d'exemple, description illustrée par le dessin joint dans lequel :
les figures 1a et 1b représentent différents porteurs équipés chacun d'un sonar trempé ;
la figure 2 représente une première variante de réalisation d'une antenne du sonar trempé des figures 1a et 1b ;
les figures 3a et 3b représentent une deuxième variante de réalisation d'une antenne du sonar trempé des figures 1a et 1b ;
les figures 4a et 4b décrivent une première variante de réalisation d'une pince permettant de verrouiller la position de l'antenne sonar le long d'un câble ;
les figures 5a et 5b décrivent une seconde variante de réalisation de la pince ;
les figures 6a, 6b et 6c illustrent une variante de pince.

Par souci de clarté, les mêmes éléments porteront les mêmes repères dans les différentes figures.

La description détaillée de l'invention est faite en rapport à un sonar trempé et plus précisément à une antenne sonar pendue à un câble fixé à un porteur. L'invention n'est pas limitée à un sonar et peut être mise en oeuvre pour tout objet pouvant coulisser le long du câble et dont on souhaite verrouiller la position par rapport au câble.

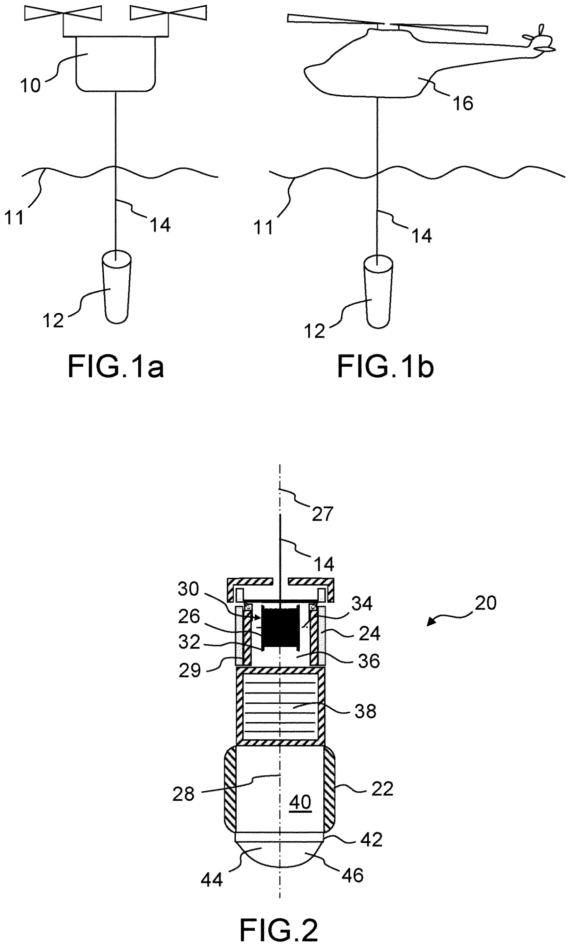

La figure 1a représente un drone 10 en vol stationnaire au-dessus de l'eau dont la surface porte le repère 11. Le drone 10 est équipé d'un sonar actif trempé comprenant une antenne 12 accrochée au drone 10 par un câble 14. Ce type de sonar permet notamment la détection et la classification d'objets sous-marins. La figure 1b représente un hélicoptère 16 également équipé d'un sonar actif trempé comprenant l'antenne 12 accrochée à l'hélicoptère 16 par le câble 14. Tout type de porteur susceptible de se positionner au-dessus de l'eau peut être équipé d'un sonar actif trempé. Le porteur est apte à descendre l'antenne à une profondeur d'immersion souhaitée, à piloter une phase de détection acoustique et à remonter l'antenne afin de terminer sa mission ou afin de réaliser d'autres missions.

La figure 2 représente une première variante de réalisation d'antenne 20 d'un sonar actif trempé. L'antenne 20 est équipée d'émetteurs acoustiques 22, de récepteurs acoustiques 24 ainsi que d'un treuil motorisé 26. Le treuil 26 permet d'enrouler et de dérouler le câble 14. Une extrémité libre 27 du câble 14 permet d'accrocher l'antenne 20 au porteur tel que le drone 10 ou l'hélicoptère 16. L'antenne 20 s'étend selon un axe 28 qui est vertical lorsque l'antenne 20 est pendue par le câble 14 et n'est soumise qu'à la gravité. L'antenne 20 a une forme sensiblement de révolution autour de l'axe 28. Les émetteurs acoustiques 22 et les récepteurs acoustiques 24 sont disposés radialement autour de l'axe 28.

Les émetteurs acoustiques 22 et les récepteurs acoustiques 24 peuvent être fixés à un boitier 29 de l'antenne 20. Les émetteurs acoustiques 22 et les récepteurs acoustiques 24 peuvent être disposés dans des zones distinctes de l'antenne 20, les zones étant superposées l'une au-dessus de l'autre comme représenté sur la figure 2. Alternativement, les zones peuvent être imbriquées comme par exemple décrit dans la demande de brevet publiée sous le n° WO2015/092066 et déposée au nom de la demanderesse.

Le treuil 26 est motorisé au moyen d'un actionneur 30. Plus précisément, l'actionneur 30 permet de faire tourner un touret 32 sur lequel le câble 14 est enroulé. L'actionneur 30 peut être un moteur électrique, hydraulique ou de façon plus générale mettant en oeuvre toute forme d'énergie apte à fonctionner dans un espace confiné sans renouvellement d'air. Il est avantageusement situé à l'intérieur du touret 32 afin de libérer de l'espace dans l'antenne 20. Le câble 14, sur sa partie déroulée, s'étend selon l'axe vertical 28. L'antenne 20 pend sous l'effet de la gravité. Sur la figure 2, le touret 32 tourne autour d'un axe horizontal 34. Alternativement, le câble 14 peut s'enrouler autour d'un touret à axe vertical. Un mécanisme de trancannage permet de ranger le câble 14 sur le touret 32. Le mécanisme de trancannage assure une translation alternée d'un guide câble le long de l'axe du touret afin de ranger le câble 14 en couches successives sur le touret 32. Dans le cas d'un touret à axe vertical, le touret peut être fixe et le mécanisme de trancannage tourne alors autour du touret en complément de sa translation. De tels mécanismes existent notamment dans les moulinets de pêche. Alternativement, le touret peut tourner au tour de son axe et le guide du mécanisme de trancannage ne se déplace qu'en translation par rapport à un boitier 29 de l'antenne 20.

Le treuil 26 formé du touret 32 et de l'actionneur 30 est disposé à l'intérieur de l'antenne 20, par exemple dans un volume interne 36 située entre les récepteurs acoustiques 24.

L'antenne 20 comprend également des modules électroniques 38 permettant notamment la génération des signaux acoustiques émis par les émetteurs 22, le traitement des signaux acoustiques reçus par les récepteurs 24 et le pilotage de l'actionneur 30.

L'énergie électrique nécessaire au fonctionnement de tous les composants de l'antenne 20 peut provenir du porteur et être véhiculée par le câble 14. Cependant cette solution nécessite d'augmenter la section du câble 14 pour être à même de véhiculer toute l'énergie nécessaire. En particulier, l'alimentation des émetteurs acoustiques nécessite une puissance instantanée importante qui peut être de l'ordre de plusieurs kilowatts. Le câble 14 pouvant dépasser plusieurs centaines de mètres de long, il est alors nécessaire de prévoir une section de câble suffisamment importante pour limiter les effets de pertes ohmiques le long du câble 14. Cela tend à augmenter les dimensions du touret 32 qui doit pouvoir accueillir le câble 14 dans la quasi-totalité de sa longueur. De plus, durant les phases d'émissions acoustiques, la transmission de données dans le câble doit être interrompue pour éviter toute perturbation des données lors de la transmission de puissance dans le câble 14.

Pour limiter les périodes de fort transfert de puissance dans le câble 14, il est avantageux que l'antenne 20 soit équipée d'une batterie 40 avantageusement disposée dans une partie basse de l'antenne 20 ou tout au moins sous le volume 36 contenant le treuil 26 afin de permettre à l'antenne de conserver une meilleure orientation verticale, notamment lors de la descente lorsqu'elle est pendue par le câble 14. La batterie 40 peut être destinée à lisser le transfert d'énergie électrique dans le câble 14, ce qui permet de réduire la section des conducteurs électriques du câble 14. A cet effet, la batterie 40 peut alimenter les émetteurs acoustiques 22 qui, habituellement émettent à forte puissance durant une faible fraction de la durée d'une mission. Il est également avantageux de se passer complètement de transfert d'énergie dans le câble 14. La batterie 40 alimente alors toutes les charges électriques de l'antenne, comme notamment le treuil 26, les modules électroniques 38, les émetteurs 22 et récepteurs acoustiques 24. Pour le rechargement de la batterie 40, l'antenne comprend des moyens de rechargement indépendants du câble 14, comme par exemple un connecteur spécifique ou une zone de rechargement sans contact 42, par exemple par induction. Le rechargement de la batterie 40 peut se faire à bord du porteur 10 ou 16 en raccordant le connecteur spécifique ou en plaçant la zone 42 à proximité d'un inducteur dédié.

L'antenne 20 peut également comprendre des capteurs d'environnement comme un sondeur 44 permettant de déterminer la distance de l'antenne 20 au fond et un capteur de température 46 permettant de mesurer l'évolution de la température de l'eau en fonction de la profondeur atteinte par l'antenne 20. En effet, la propagation des ondes sonores dans l'eau est fonction de l'évolution de la température de l'eau. Ces capteurs peuvent également être alimentés par la batterie 40.

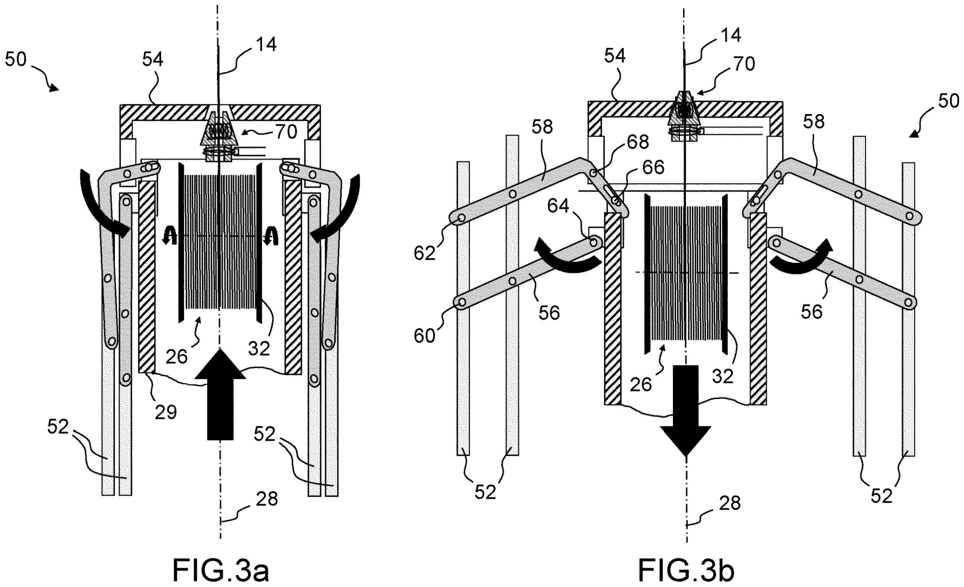

Les figures 3a et 3b représentent une deuxième variante de réalisation d'antenne 50 d'un sonar actif trempé selon l'invention. Dans cette variante lors de la réception sonar, les récepteurs acoustiques 24, éventuellement placés sur des bras, sont déployés à distance du boitier 29 de l'antenne 50. Par contre lors de la manoeuvre du treuil 26, les récepteurs acoustiques 24 sont rangés contre le boitier 29 afin de limiter la trainée de l'antenne 50 lors de la descente et de la remontée de l'antenne 50 dans l'eau. Ce type d'antenne déployable a été développé dans le passé par la demanderesse. Dans ce type d'antenne le déploiement des récepteurs acoustiques est réalisé au moyen d'un mécanisme électromécanique placé dans l'antenne. Ce mécanisme comprend un moteur électrique déplaçant des bras supportant les récepteurs acoustiques. Le moteur est actionné aussi bien lors du déploiement que lors du repliement des bras. Ce mécanisme est lourd et encombrant.

II est possible de conserver dans l'antenne un tel mécanisme électromécanique de manoeuvre de bras supportant les récepteurs acoustiques 24. Alternativement, la seconde variante permet de se passer de ce mécanisme.

L'antenne 50 comprend des bras 52 déployables sur lesquels sont disposés les récepteurs acoustiques 24. Les bras 52 sont avantageusement répartis de façon régulière autour de l'axe 28 afin d'assurer une détection acoustique complète autour de l'axe 28. La figure 3a représente partiellement l'antenne 50 dans laquelle les bras 52 sont repliés contre le boitier 29. La figure 3b représente également partiellement l'antenne 50 dans laquelle les bras 52 sont déployés à distance du boitier 29. Les bras 52 sont articulés par rapport au boitier 29 et par rapport à un corps 54 formant un couvercle en forme de rondelle et mobile en translation par rapport au boitier 29 selon l'axe 28. Le corps 54 est par exemple de révolution autour de l'axe 28 et le câble 14 traverse le corps 54 par le trou de la rondelle.

Cette double articulation permet aux bras 52 de s'écarter ou de se rapprocher du boitier 29 lors de déplacement du corps 54. Plus précisément, dans la position du corps 54 représentée sur la figure 3a, les bras 52 sont repliés contre le boitier 29 et dans la position du corps 54 représentée sur la figure 3b, les bras 52 sont déployés à distance du boitier 29.

Les bras 52 peuvent être articulés directement sur le boitier 29 et sur le corps 54 au moyen de liaisons pivot. Une fois déployés, les bras 52 s'étendent de façon horizontale ou inclinée par rapport à l'axe 28. La cinématique de ce type de mécanisme est très simple. Elle est notamment employée dans des bouées sonar où le porteur flotte à la surface de l'eau. Cependant cette orientation des bras peut dégrader la détection acoustique lorsque le porteur est un drone ou un hélicoptère. En effet, dans cette orientation, les récepteurs acoustiques 24 sont perturbés par le bruit généré par le porteur. Il peut donc être préférable de prévoir une orientation verticale des bras 52 lorsqu'ils sont déployés. Autrement dit, il peut être souhaitable de conserver les bras parallèles à l'axe 28 lors de la translation du corps 54. Pour ce faire, les bras 52 peuvent être articulés par l'intermédiaire d'un parallélogramme déformable. Plus précisément, deux barres 56 et 58 possédant des tronçons parallèles sont articulées d'une part sur un bras 52, respectivement au moyen des liaisons 60 et 62, et d'autre part sur le boitier 29, respectivement au moyen des liaisons 64 et 66. Une des barres, la barre 58 dans l'exemple représenté, est articulée au corps 54 au moyen de la liaison 68 en un point distant de son articulation au bras 52 et de son articulation au boitier 29. Ainsi, lorsque le corps 54 se déplace en translation, la barre 58 pivote autour de son articulation au boitier 29 et entraine le bras 52. La barre 56 est entrainée par le bras 52 et pivote également par rapport au boitier 29. Lors de ce déplacement, l'orientation du bras 52 par rapport au boitier 29 ne varie pas. Dans l'exemple représenté, le bras 52 reste parallèle à l'axe 29. Comme représenté, il est possible d'articuler plusieurs bras 52, deux dans l'exemple représenté, aux deux mêmes barres 56 et 58. Plus précisément, chacun des deux bras 52 est articulé à la barre 58 et à la barre 56. Comme précisé plus haut, l'antenne 50 peut être équipée de plusieurs bras 52 répartis autour de l'axe 28. Pour supporter ces différents bras 52, plusieurs séries de deux barres 56 et 58 réparties elles aussi de façon radiale autour de l'axe 28 équipent l'antenne 50.

Le déplacement du corps 54 en translation par rapport au boitier 29 peut être réalisé au moyen d'un actionneur électromécanique assurant directement ce déplacement. L'actionneur est par exemple formé d'un vérin linéaire dont le corps est fixé au boitier 29 et dont la tige, se déplaçant en translation par rapport au corps du vérin, est fixée au corps 54. Le montage inverse est également possible.

Avantageusement, il est possible de se passer d'actionneur entre le boitier 29 et le corps 54 en utilisant les forces de gravité s'exerçant sur le boitier 29 et sur le corps 54. En effet, le boitier 29 peut contenir des composants lourds qui peuvent être mis à profit pour le déploiement des bras 52. Pour ce faire, le corps 54 est muni d'une pince 70 configurée pour pincer le câble 14 et l'immobiliser par rapport au corps 54.

En position ouverte de la pince 70, le câble 14 est libre par rapport au corps 54 et son poids, associé à celui des bras 52 par l'intermédiaire de l'articulation 68, entraine le corps 54 vers le bas, c'est-à-dire vers le boitier 29. Dans cette position, les bras 52 sont également entrainés vers le bas, c'est-à-dire en position repliée contre le boitier 29. Cette position, pince ouverte, est représentée sur la figure 3a.

En position fermée de la pince 70 le câble 14 est immobilisé par rapport au corps 54. Dans cette position, il est possible de manoeuvrer le treuil 26 de façon à dérouler le câble et ainsi permettre au boitier 29 et aux équipements qui lui sont fixé de descendre par rapport au corps 54 sous l'effet de la gravité. Ce mouvement relatif du corps 54 par rapport au boitier 29 entraine le déploiement des bras 52 pour atteindre la position de la figure 3b. Ceci est possible si les bras 52, et le cas échéant les barres 56 et 58, sont plus légers que le boitier 29 et tous les composants qui lui sont fixés. Cette condition est généralement facilement respectée du fait de la présence de composants lourds dans le boitier 29, notamment la batterie 40 et le treuil 26. La manoeuvre du treuil 26 pour dérouler le câble 14 après la fermeture de la pince 70 se fait de manière coordonnée avec le déplacement relatif du corps 54 par rapport au boitier 29. Plus précisément, la longueur de câble déroulée est sensiblement égale à la longueur de la translation du corps 54 par rapport au boitier 29. Dérouler une plus grande longueur de câble risquerait d'entrainer la présence câble mou entre le touret 32 et la pince 70. Dérouler une plus faible longueur de câble ne permet pas de déployer complètement les bras 52. Il est possible de contrôler le déploiement des bras 52 par la manoeuvre du treuil 26.
La pince 70 peut être mise en oeuvre avec l'antenne 20 décrite sur la figure 2, c'est-à-dire sans bras déployable.

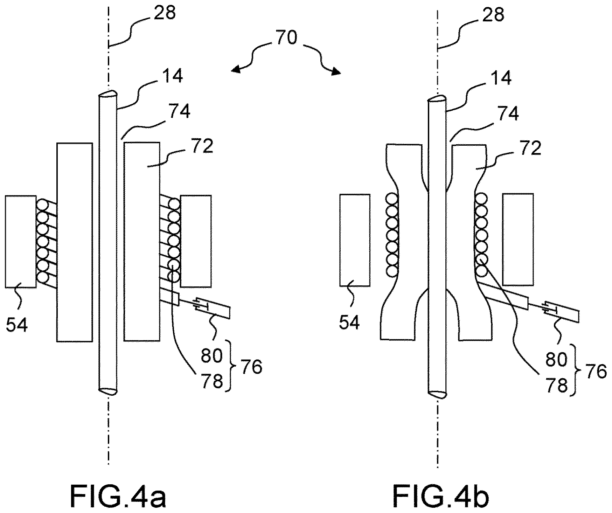

Les figures 4a et 4b représentent une première variante de réalisation de la pince 70 formant un dispositif de verrouillage de l'antenne 20 ou 50 le long du câble 14. Comme indiqué plus haut l'invention peut être mise en oeuvre pour tout objet pouvant coulisser le long d'un câble traversant la pince 70 et dont on souhaite verrouiller la position par rapport au câble 14. La pince 70 peut être mise en oeuvre pour toute orientation du câble 14. Il n'est pas nécessaire que le câble 14 reste vertical pour mettre en oeuvre la pince 70.

La pince 70 comprend une partie fixe pouvant faire partie du corps 54 ou être rapportée au corps 54 et solidarisée à celui-ci. Comme indiqué plus haut, la pince 70 peut être mise en oeuvre dans l'antenne 20. La partie fixe de la pince est alors solidaire du boitier 29. Pour simplifier la suite de la description, on considère que la partie fixe de la pince 70 est le corps 54. La pince 70 comprend en outre un anneau 72 comprenant un matériau élastique à comportement fluide. Il peut s'agir d'un matériau monobloc par exemple à base de caoutchouc ou de silicone. Alternativement, l'anneau 72 peut comprendre une enveloppe élastique renfermant un fluide. Le matériau monobloc permet de mettre en oeuvre un matériau quasi solide dont la forme se tient lorsque qu'aucune contrainte mécanique n'est appliquée au matériau. La mise en oeuvre d'une enveloppe permet de mettre en oeuvre un matériau beaucoup plus fluide, par exemple liquide. L'enveloppe peut assurer le comportement élastique de l'anneau 72. Avec ou sans enveloppe, en l'absence de contrainte mécanique, l'anneau 72 possède une forme pleine entourant un évidement central 74 traversé par le câble 14.

La pince 70 comprend également un actionneur 76 configuré pour compresser l'anneau 72 entre deux formes. Une première forme, appelée forme ouverte, est représentée sur la figure 4a. La première forme permet d'obtenir la position ouverte de la pince 70. Dans cette première forme de l'anneau 72, l'actionneur 76 ne comprime pas l'anneau 72 qui conserve sa forme naturelle dans laquelle le câble 14 peut circuler librement dans l'évidement central 74. Alternativement, dans la première forme de l'anneau 72, l'actionneur 76 peut déjà appliquer à l'anneau 72 une précontrainte, par exemple pour maintenir l'anneau 72 en place. Même en présence de cette précontrainte, le câble 14 peut circuler librement dans l'évidement central 74.

Dans une seconde forme de l'anneau 72, appelée forme fermée et représentée sur la figure 4b, le câble 14 est comprimé par l'anneau 72. Autrement dit, l'évidement central 74 se resserre sous l'effet de l'actionneur 76 jusqu'à comprimer le câble 14 et empêcher sa circulation dans la pince 70. La position du corps 54 et donc de l'antenne est ainsi verrouillée. La seconde forme permet d'obtenir la position fermée de la pince 70.

La présence d'un matériau à comportement fluide dans l'anneau 72 permet à l'évidement central 74 d'épouser parfaitement la forme du câble 14 sur l'ensemble de sa surface extérieure maintenue par la pince 70. Une telle pince peut s'adapter à un câble irrégulier sur sa longueur. Les irrégularités peuvent avoir toutes sortes de causes. Elles peuvent être involontaires et par exemple être dues à des imperfections de fabrication, à des déformations occasionnées lors de l'utilisation de l'antenne. Les imperfections peuvent être volontaires et définies lors de la conception du câble.

La pince 70, et notamment l'anneau 72 et l'actionneur 76, sont configurés pour que l'anneau 72 conserve son comportement élastique, c'est-à-dire sans déformation permanente, entre ses deux formes. Plus précisément, à partir de la forme fermée, lorsque l'actionneur 76 relâche sa compression, le comportement élastique de l'anneau 72 lui permet de retrouver sa forme ouverte.

Dans la variante représentée sur les figures 4a et 4b, l'actionneur 76 exerce un effort radial sur l'anneau 72 en direction de l'axe 28 pour faire passer l'anneau 72 de sa première forme de la figure 4a à sa seconde forme de la figure 4b.

Pour appliquer à l'anneau 72 un effort radial, dans la variante des figures 4a et 4b, l'actionneur 76 comprend par exemple un ressort hélicoïdal 78 s'étendant selon l'axe 28 fixé à l'une de ses extrémités. Un moteur ou un vérin 80 est configuré pour tirer sur la seconde extrémité du ressort 78 afin de le resserrer autour de l'axe 28.

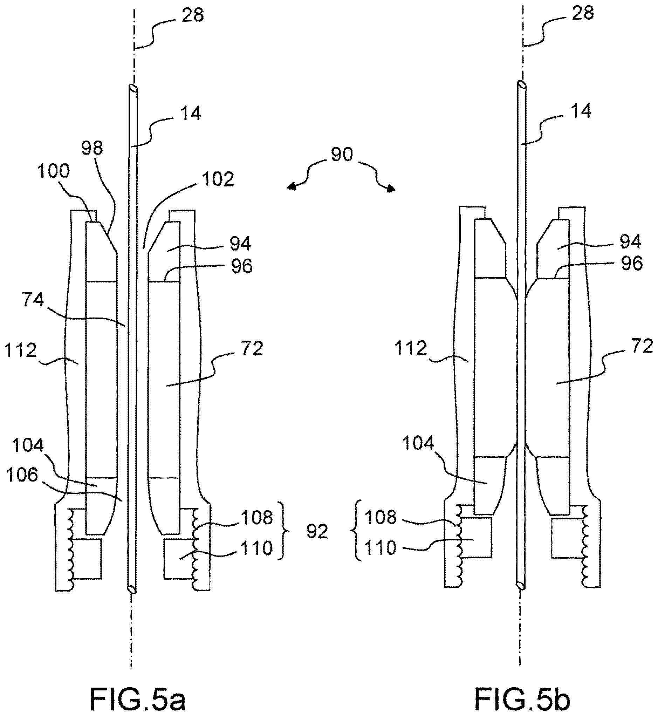

Les figures 5a et 5b représentent une seconde variante de réalisation de la pince portant ici le repère 90. On retrouve dans cette variante l'anneau 72 pouvant prendre ses deux formes, la forme ouverte, représentée sur la figure 5a et laissant circuler librement le câble 14 au travers de la pince 90 et la forme fermée, représentée sur la figure 5b et compressant le câble 14 en l'empêchant de circuler dans la pince 90. A la différence de la pince 70, la pince 90 comprend un actionneur 92 exerçant un effort axial, selon l'axe 28, sur l'anneau 72 tendant à réduire la longueur de l'anneau 72 selon l'axe 28 pour atteindre sa forme fermée. En relâchant l'effort exercé par l'actionneur 92, du fait de l'élasticité de l'anneau 72, sa longueur augmente et l'anneau 72 reprend forme ouverte.

En mettant en oeuvre un matériau sensiblement incompressible, tel que par exemple le caoutchouc, dont le coefficient de Poisson est proche de 0,5, la réduction de hauteur de l'anneau 72 se traduit intégralement par une augmentation de la section de l'anneau 72 perpendiculairement à l'axe 28. Cette augmentation de section entraine une réduction de la section de l'évidement central 74 et donc une compression du câble 14. Il est possible de mettre en oeuvre des matériaux dont le coefficient de Poisson est inférieur à 0,5. Il est alors nécessaire que l'actionneur 92 génère un déplacement plus important pour obtenir la même réduction de section de l'évidement central 74 qu'avec un matériau incompressible. Autrement dit, plus le coefficient de Poisson est grand, donc proche de 0,5, meilleure est le rendement de l'actionneur 92.

L'actionneur 92 peut exercer son effort de part et d'autre de l'anneau 72. Cependant cette disposition de l'actionneur 92 peut être difficile à mettre en oeuvre du fait de la hauteur de l'anneau 72 le long de l'axe 28. Il est avantageux que l'anneau 72 prenne appui contre le corps 54 et que l'actionneur 92 exerce son effort sur l'anneau 72 à l'opposé de cet appui sur le corps 54. De plus, il est avantageux que l'appui de l'anneau 72 sur le corps 54 se fasse de façon répartie autour de l'axe 28 du câble 14. A cet effet, la pince 90 comprend une rondelle 94 rigide solidaire du corps 54 et traversée par le câble 14. L'anneau 72 prend appui contre une face 96 de la rondelle 94 perpendiculaire à l'axe 28 du câble 14. L'anneau 72 est compressé entre la rondelle 94 et l'actionneur 92.

La rondelle 94 peut permettre de guider le câble 14 en entrée de la pince 90. A cet effet, la rondelle 94 possède un chanfrein 98 réalisé dans une face 100 de la rondelle 94 opposée à la face 96. Le chanfrein 98 est réalisé autour du perçage 102 de la rondelle 94. Le perçage 102 est utilisé pour le passage du câble 14 au travers de la rondelle 94. Le perçage 102 et l'évidement central 74 de l'anneau 72 sont disposés dans le prolongement l'un de l'autre. Plus précisément, le perçage 102 et l'évidement central 74 sont tous deux concentriques de l'axe 28. Dans un plan perpendiculaire à l'axe 28, la section de l'évidement central 74 est constante sur toute la hauteur de l'anneau 72. La section du perçage 102 peut posséder les mêmes dimensions que celles de la section de l'évidement central 74 dans la forme ouverte de l'anneau 72 représenté sur la figure 5a.

En complément du guidage du câble 14, la rondelle 94 peut limiter les frottements du câble 14 circulant dans l'évidement central 74 lorsque l'anneau 72 est dans sa forme ouverte. A cet effet, la section du perçage 102 a des dimensions inférieures à celles de la section de l'évidement central 74 dans la forme ouverte. Ainsi, dans la forme ouverte de l'anneau 72, le câble 14 entrera au contact de la rondelle 94 sans toucher l'anneau 72 au voisinage de la rondelle 94. On pourra choisir pour la rondelle 94, un matériau ayant un coefficient de frottement avec le câble 14 plus faible que le coefficient de frottement entre l'anneau 72 et le câble. A cet effet, la rondelle 94 peut par exemple être réalisée en bronze.

Il est avantageux que l'appui de l'actionneur 92 sur l'anneau 72 se fasse de façon répartie autour de l'axe 28 du câble 14. A cet effet, la pince 90 comprend une seconde rondelle 104 mobile en translation selon l'axe 28. La mobilité en translation de la rondelle 104 permet à l'anneau 72 de passer de sa forme ouverte à sa forme fermée et inversement. La rondelle 104 comprend un perçage 106 par lequel passe le câble 14. La rondelle 104 peut avoir la même forme que celle de la rondelle 94, notamment avec son chanfrein. L'anneau 72 est disposé entre les rondelles 94 et 104. Les deux rondelles 94 et 104 sont montées de façon opposée. L'actionneur 92 exerce son effort sur l'anneau 72 par l'intermédiaire de la rondelle 104. En définissant des sections des perçages 102 et 106 ayant pour tous les deux, des dimensions inférieures à celles de la section de l'évidement central 74 dans sa forme ouverte, le câble 14, lorsqu'il est tendu, ne touche que les perçages 102 et 106 et pas l'anneau 72, supprimant ainsi tout frottement entre le câble 14 et l'anneau 72 dans sa forme ouverte. Comme pour la rondelle 94, le matériau de la rondelle 104 est choisi pour limiter les efforts de frottement avec le câble 14.

L'actionneur 92 peut prendre de nombreuses formes telles que par exemple un vérin linéaire exerçant son effort sur la rondelle 104 lorsqu'elle est présente, ou directement sur l'anneau 72 en l'absence de rondelle 104. Alternativement, afin de simplifier la pince 90, l'actionneur 92 comprend un système vis écrou dont une partie fixe est solidaire du corps 54 et dont une partie mobile est destinée à compresser l'anneau 72. La configuration du système vis écrou représentée sur les figures 5a et 5b assurent une bonne compacité du système vis écrou. Plus précisément, un taraudage 108 concentrique de l'axe 28 est réalisé dans le corps 54. Une vis 110 coopère avec le taraudage 108, se déplace le long de l'axe 28 et appuie sur la rondelle 104 en direction de la rondelle 94 pour passer de la forme ouverte à la forme fermée de l'anneau 72 et en sens inverse pour revenir à la forme ouverte. La vis 110 est percée selon l'axe 28 pour permettre le passage du câble 14.

En comprimant l'anneau 72 entre la rondelle 94 et l'actionneur 92, l'anneau 72 augmente sa section aussi bien pour réduire les dimensions de l'évidement central 74 qu'en augmentant les dimensions de la section extérieure de l'anneau 72 qui se déforme en tonneau. La réduction de la section de l'évidement central est utile pour compresser le câble 14. Cependant le gonflement de l'extérieur de l'anneau 72 est inutile pour assurer le pincement du câble 14. Il est avantageux d'éviter ce gonflement en disposant l'anneau 72 à l'intérieur d'un tube 112 rigide permettant de limiter l'expansion de l'anneau 72 radialement autour de l'axe 28. Le tube 112 possède une section intérieure dont les dimensions sont les mêmes, aux jeux fonctionnels près, que les dimensions de la section extérieure de l'anneau 72 dans sa forme ouverte. Le tube 112 peut être monté librement par rapport au corps 54 et être maintenu par adhérence sur l'anneau 72. Alternativement, le tube 112 peut être solidaire du corps 54 ou est même directement percé dans le corps 54. Ainsi, dans le corps 54 sont réalisées plusieurs fonctions : un appui pour la rondelle 94, le tube 112 et le taraudage 108. Afin de limiter le nombre de pièces mécaniques distinctes de la pince 90, la rondelle 94 peut être directement réalisée dans le corps 54.

Dans les deux variantes, la pince comprend un seul actionneur, respectivement 76 et 92 permettant de compresser l'anneau 72. Il est également possible de mettre en oeuvre plusieurs actionneurs éventuellement indépendants.

Sur les figures 4a et 4b, le corps 54 forme la partie fixe de la pince 70. De même sur les figures 5a et 5b, le tube 112 forme la partie fixe de la pince 90. La partie fixe de la pince peut être solidaire de l'antenne 20 ou 50. Alternativement, la partie fixe de la pince peut être flottante par rapport à l'antenne 20 ou 50. En position ouverte de la pince, la partie fixe peut conserver au moins un degré de liberté en translation selon l'axe 28 par rapport à l'antenne 20 ou 50. Ce degré de liberté facilite la fermeture de la pince 70 ou 90 lorsque l'antenne est en descente ou en remontée. Ce degré de liberté permet de limiter le frottement de l'anneau 72 sur le câble 14 lors de la fermeture de la pince.

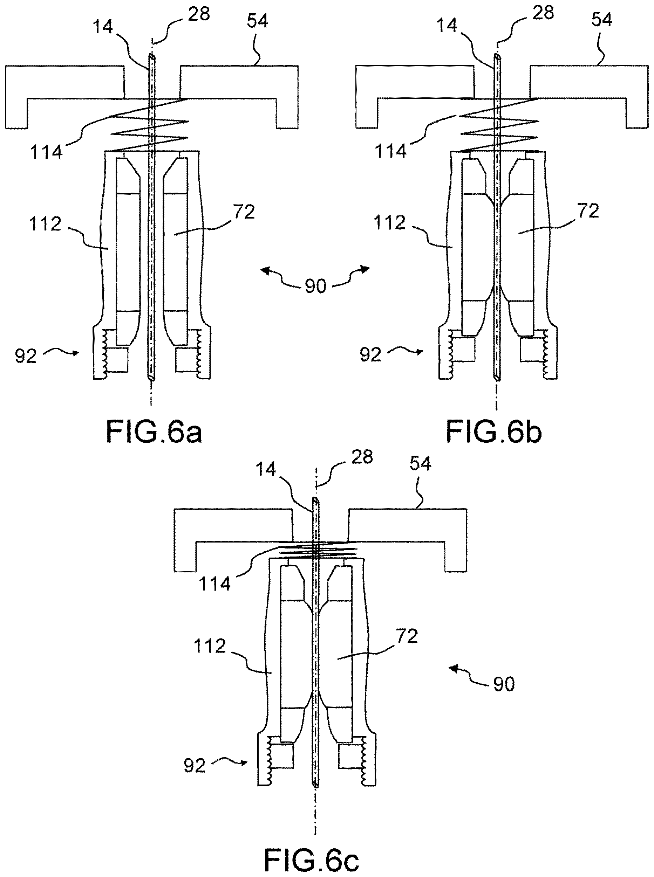

Plus précisément, sur les figures 6a, 6b et 6c, le tube 112 est relié au corps 54 en autorisant un mouvement de translation selon l'axe 28 entre le corps 54 et le tube 112. Un ressort 114 relie le tube 112 au corps 54. Le ressort 114 peut se comprimer en rapprochant le tube 112 du corps 54. Sur la figure 6a, la pince 90 est en position ouverte. Le tube 112 est situé sous le corps 54 à distance du corps 54. Le câble 14 peut circuler librement dans l'évidement central 74 de l'anneau 72. La figure 6b représente le début de la fermeture de la pince 90. Plus précisément l'actionneur 92 comprime l'anneau 72 pour l'amener en pression contre le câble 14. Au début du serrage, le ressort 114 reste encore détendu comme sur la figure 6a. Ensuite, comme représenté sur la figure 6c, la gravité agit sur le corps 54 et le ressort 114 se comprime amenant le tube 112 en butée contre le corps 54. Autrement dit, dans la position de la figure 6c, le degré de liberté en translation de la pince 90 par rapport au corps 54 selon l'axe 28 est supprimé.

Le ressort 114 permet une souplesse du tube 112 par rapport au corps 54 en translation selon l'axe 28 et également selon les autres degrés de liberté. Ceci peut améliorer le centrage du câble 14 en traversée de la pince 90. Autrement dit, outre le degré de liberté en translation selon l'axe 28, les autres degrés de liberté peuvent présenter un avantage. Alternativement à la présence du ressort 114, tout autre glissière selon l'axe 28 permettant un mouvement de translation du tube 112 par rapport au corps 54 peut être mise en oeuvre. Cette translation permet de limiter le glissement du câble 14 dans l'évidement central 74 de l'anneau 72 lors de la fermeture de la pince 90. Plus précisément, il peut être souhaitable de serrer la pince 90 alors que l'antenne est en descente. Avec une pince 90 dont la partie fixe, en l'occurrence le tube 112, est solidaire du corps 54 lors du serrage de la pince 90, l'antenne perd de la vitesse et la pince 90 fait office de frein en frottant sur le câble 14. L'ensemble de l'énergie cinétique de l'antenne est dissipé par ce frottement, ce qui entraine une usure du câble 14 et de l'anneau 72. Au contraire, avec un degré de liberté de la pince 90 en translation selon l'axe 28 par rapport au corps 54, seule l'énergie cinétique due à la masse de la pince est dissipée par frottement sur le câble 14. La pince 90 ayant une masse très inférieure à celle de la totalité de l'antenne, et au plus, moins de la moitié de la masse de l'antenne, la majeure partie de l'énergie cinétique de l'antenne est transformée en énergie potentielle dans la compression du ressort 114, ce qui limite donc l'énergie dissipée par frottement entre l'anneau 72 et le câble 14 et donc l'usure de ceux-ci. La compression du ressort 114 pour limiter le frottement sur le câble fonctionne aussi bien à la descente qu'à la remontée de l'antenne 50. Dans l'exemple représenté sur les figures 6a, 6b et 6c le ressort 114 se comprime lors du serrage de la pince 90. Alternativement, il est possible de prévoir un ressort se tendant lors du serrage de la pince 90. Le bas du tube 112 est alors fixé à un ressort qui est lui-même fixé au corps 54, situé cette fois sous le tube 112. Il est également possible de disposer le tube 112 entre deux ressorts, chacun d'eux étant fixé d'une part au tube 112 et d'autre part au corps 54.

Le ressort 114 peut être remplacé par d'autres types d'éléments élastiques comme des élastomères. L'élément élastique peut posséder des propriétés d'amortissement permettant de dissiper l'énergie potentielle issue de l'énergie cinétique de la pince. Il est par exemple possible de mettre en oeuvre un amortisseur à la place ou en complément du ressort 114. Certains élastomères présentent également des propriétés amortissantes en complément de leur propriété élastique.

Le montage décrit à l'aide des figures 6a à 6c peut bien entendu être mis en oeuvre pour la pince 70 et de façon plus générale pour toute pince entrant dans le cadre de l'invention.

## Revendications

1. Dispositif de verrouillage d'un objet (20 ; 50) pouvant coulisser le long d'un câble (14), le dispositif comprenant le câble (14) et une pince (70 ; 90), le câble (14) traversant la pince (70 ; 90) en s'étendant selon un axe (28), la pince (70) comprenant : une partie fixe (112) reliée à l'objet (20 ; 50) par une liaison (114) à au moins un degré de liberté en translation selon l'axe (28), un anneau (72) comprenant un matériau élastique à comportement fluide, l'anneau (72) comprenant un évidement central (74) traversé par le câble (14), **caractérisé en ce que** le dispositif comporte un actionneur (76 ; 92) configuré pour compresser l'anneau (72) entre deux formes, de façon à passer d'une première des formes, appelée forme ouverte, le câble (14) pouvant circuler librement dans l'évidement central (74) à une seconde des deux formes, appelée forme fermée, le câble (14) étant comprimé par l'anneau (72).

2. Dispositif de verrouillage selon la revendication 1, dans lequel la partie fixe (112) de la pince (70 ; 90) est reliée à l'objet (20 ; 50) au moyen d'au moins un élément élastique (114) configuré pour se comprimer ou se détendre lors du serrage de la pince (70 ; 90).

3. Dispositif de verrouillage selon la revendication 2, dans lequel l'élément élastique (114) est configuré pour permettre une souplesse de la partie fixe (112) par rapport à l'objet (50) en translation selon l'axe (28) et également selon les autres degrés de liberté.

4. Dispositif de verrouillage selon l'une des revendications 2 ou 3, dans lequel l'élément élastique (114) est configuré pour transformer une majeure partie d'énergie cinétique de l'objet (50) en énergie potentielle dans la déformation de l'élément élastique (114).

5. Dispositif de verrouillage selon l'une des revendications 2 à 4, dans lequel l'élément élastique (114) présente des propriétés d'amortissement permettant de dissiper l'énergie potentielle issue de l'énergie cinétique de l'objet (50).

6. Dispositif de verrouillage selon l'une des revendications précédentes, dans lequel l'actionneur (92) exerce sur l'anneau (72) un effort axial selon l'axe (28) du câble (14) tendant à réduire une longueur de l'anneau (72) selon l'axe (28) du câble (14) pour atteindre la forme fermée.

7. Dispositif de verrouillage selon la revendication 6, comprenant une rondelle (94) rigide solidaire de la partie fixe (112) et traversée par le câble (14), l'anneau (72) prenant appui contre une face (96) de la rondelle (94), la face (96) étant perpendiculaire à l'axe (28) du câble (14), l'anneau (72) étant compressé entre la rondelle (94) et l'actionneur (92).

8. Dispositif de verrouillage selon la revendication 7, dans lequel la face (96) de la rondelle (94) est appelée première face, dans lequel la rondelle (94) possède une seconde face (100) opposée à la première face (96) et dans lequel la seconde face (100) est chanfreinée autour d'un perçage (102) de la rondelle (94) traversé par le câble (14).

9. Dispositif de verrouillage selon l'une des revendications 7 ou 8, dans lequel l'actionneur (92) déplace l'anneau selon l'axe (28) du câble (14), en direction de la rondelle (94) pour atteindre la forme fermée et en direction opposée à la rondelle (94) pour atteindre la forme ouverte.

10. Dispositif de verrouillage selon la revendication 9, dans lequel l'actionneur (92) comprend un système vis écrou (108, 110) dont une partie fixe (108) est solidaire de la partie fixe (112) de la pince (90) et dont une partie mobile (110) est configurée pour compresser l'anneau (72).

11. Dispositif de verrouillage selon l'une des revendications 6 à 10, comprenant un tube (112) rigide s'étendant selon l'axe (28) du câble (14), l'anneau (72) étant disposé à l'intérieur du tube (112), le tube (112) permettant de limiter l'expansion de l'anneau (72) radialement autour de l'axe (28) du câble (14).

12. Dispositif de verrouillage selon la revendication 11, dans lequel le tube (112) est solidaire de la rondelle (94).

13. Dispositif de verrouillage selon l'une des revendications 7 à 12 en tant que revendication dépendante de la revendication 7, dans lequel la rondelle (94) est appelée première rondelle (94), le dispositif comprenant une seconde rondelle (104) traversée par le câble (14) et interposée entre l'actionneur (92) et l'anneau (72).

14. Dispositif de verrouillage selon la revendication 13, dans lequel les deux rondelles (94, 104) possèdent des perçages (102, 106) centrés autour de l'axe (28) et traversés par le câble (14), dans lequel, dans sa forme ouverte, l'évidement central (74) possède une section perpendiculaire à l'axe (28) constante le long de l'axe (28) et dans lequel, les sections des perçages (102, 106) ont des dimensions plus faibles que celles de la section de l'évidement central (74).

15. Dispositif de verrouillage selon l'une des revendications 1 à 5, dans lequel l'actionneur (76) exerce un effort radial sur l'anneau (72) en direction de l'axe (28) du câble (14) pour faire passer l'anneau (72) de la forme ouverte à la forme fermée.

16. Dispositif de verrouillage selon l'une des revendications précédentes, dans lequel l'anneau (72) possède une forme pleine entourant l'évidement central (74).

## Patentansprüche

1. Vorrichtung zum Verriegeln eines Objekts (20; 50), das entlang eines Kabels (14) gleiten kann, wobei die Vorrichtung das Kabel (14) und eine Klemme (70; 90) umfasst, wobei das Kabel (14) durch die Klemme (70; 90) verläuft, während es sich entlang einer Achse (28) erstreckt, wobei die Klemme (70) Folgendes umfasst: einen festen Teil (112), der mit dem Objekt (20; 50) durch eine Verbindung (114) mit mindestens einem translationalen Freiheitsgrad entlang der Achse (28) verbunden ist, einen Ring (72), der ein elastisches Material mit Fluidverhalten umfasst, wobei der Ring (72) einen zentralen Hohlraum (74) umfasst, durch den das Kabel (14) verläuft, **dadurch gekennzeichnet, dass** die Vorrichtung Folgendes aufweist:
einen Aktuator (76; 92), der zum Zusammendrücken des Rings (72) zwischen zwei Formen konfiguriert ist, sodass er (14) von einer ersten der Formen, als offene Form bezeichnet, wobei das Kabel frei in dem zentralen Hohlraum (74) umlaufen kann, in eine zweite der beiden Formen, als geschlossene Form bezeichnet, übergehen kann, wobei das Kabel (14) durch den Ring (72) zusammengedrückt wird.

2. Verriegelungsvorrichtung nach Anspruch 1, wobei der feste Teil (112) der Klemme (70; 90) mit dem Objekt (20; 50) durch mindestens ein elastisches Element (114) verbunden ist, das zum Zusammendrücken oder Entspannen beim Zuklemmen der Klemme (70; 90) konfiguriert ist.

3. Verriegelungsvorrichtung nach Anspruch 2, wobei das elastische Element (114) zum Zulassen einer Flexibilität des festen Teils (112) in Bezug auf das Objekt (50) bei einer Translationsbewegung entlang der Achse (28) und auch bei den anderen Freiheitsgraden konfiguriert ist.

4. Verriegelungsvorrichtung nach einem der Ansprüche 2 oder 3, wobei das elastische Element (114) zum Umwandeln eines Großteils von kinetischer Energie des Objekts (50) in potentielle Energie bei der Verformung des elastischen Elements (114) konfiguriert ist.

5. Verriegelungsvorrichtung nach einem der Ansprüche 2 bis 4, wobei das elastische Element (114) Dämpfungseigenschaften aufweist, die das Abführen der aus der kinetischen Energie des Objekts (50) gewonnenen potentiellen Energie zulassen.

6. Verriegelungsvorrichtung nach einem der vorhergehenden Ansprüche, wobei der Aktuator (92) eine axiale Kraft entlang der Achse (28) des Kabels (14) auf den Ring (72) ausübt, die dazu neigt, eine Länge des Rings (72) entlang der Achse (28) des Kabels (14) zu reduzieren, um die geschlossene Form zu erreichen.

7. Verriegelungsvorrichtung nach Anspruch 6, die einen starren Kranz (94) umfasst, der mit dem festen Teil (112) fest verbunden ist und durch den das Kabel (14) verläuft, wobei der Ring (72) an einer Fläche (96) des Kranzes (94) anliegt, wobei die Fläche (96) senkrecht zur Achse (28) des Kabels (14) verläuft, wobei der Ring (72) zwischen dem Kranz (94) und dem Aktuator (92) zusammengedrückt ist.

8. Verriegelungsvorrichtung nach Anspruch 7, wobei die Fläche (96) des Kranzes (94) als erste Fläche bezeichnet wird, wobei der Kranz (94) eine zweite Fläche (100) gegenüber der ersten Fläche (96) aufweist, und wobei die zweite Fläche (100) um ein Loch (102) in dem Kranz (94) herum abgeschrägt ist, durch das das Kabel (14) verläuft.

9. Verriegelungsvorrichtung nach einem der Ansprüche 7 oder 8, wobei der Aktuator (92) den Ring entlang der Achse (28) des Kabels (14) auf den Kranz (94) zu bewegt, um die geschlossene Form zu erreichen, und vom Kranz (94) weg bewegt, um die offene Form zu erreichen.

10. Verriegelungsvorrichtung nach Anspruch 9, wobei der Aktuator (92) ein Schraube-Mutter-System (108, 110) umfasst, von dem ein fester Teil (108) mit dem festen Teil (112) der Klemme (90) fest verbunden ist und von dem ein beweglicher Teil (110) zum Zusammendrücken des Rings (72) konfiguriert ist.

11. Verriegelungsvorrichtung nach einem der Ansprüche 6 bis 10, die ein starres Rohr (112) umfasst, das sich entlang der Achse (28) des Kabels (14) erstreckt, wobei der Ring (72) innerhalb des Rohrs (112) angeordnet ist, wobei es das Rohr (112) erlaubt, die Ausdehnung des Rings (72) radial um die Achse (28) des Kabels (14) zu begrenzen.

12. Verriegelungsvorrichtung nach Anspruch 11, wobei das Rohr (112) mit dem Kranz (94) fest verbunden ist.

13. Verriegelungsvorrichtung nach einem der Ansprüche 7 bis 12 als von Anspruch 7 abhängiger Anspruch, wobei der Kranz (94) als erster Kranz (94) bezeichnet wird, wobei die Vorrichtung einen zweiten Kranz (104) umfasst, durch den das Kabel (14) verläuft und der zwischen dem Aktuator (92) und dem Ring (72) angeordnet ist.

14. Verriegelungsvorrichtung nach Anspruch 13, wobei die beiden Kränze (94, 104) Löcher (102, 106) aufweisen, die um die Achse (28) zentriert sind und durch die das Kabel (14) verläuft, wobei der zentrale Hohlraum (74) in seiner offenen Form einen Querschnitt senkrecht zur Achse (28) aufweist, der entlang der Achse (28) konstant ist, und wobei die Querschnitte der Löcher (102, 106) kleinere Abmessungen aufweisen als die des Querschnitts des zentralen Hohlraums (74).

15. Verriegelungsvorrichtung nach einem der Ansprüche 1 bis 5, wobei der Aktuator (76) eine radiale Kraft in Richtung der Achse (28) des Kabels (14) auf den Ring (72) ausübt, um den Ring (72) von der offenen Form in die geschlossene Form übergehen zu lassen.

16. Verriegelungsvorrichtung nach einem der vorherigen Ansprüche, wobei der Ring (72) eine volle Form aufweist, die den zentralen Hohlraum (74) umgibt.

## Claims

1. A locking device for locking an object (20; 50) capable of sliding along a cable (14), the device comprising the cable (14) and a clamp (70; 90), the cable (14) passing through the clamp (70; 90) while extending along an axis (28), the clamp (70) comprising: a fixed part (112) connected to the object (20; 50) by a connection (114) having at least one translatory degree of freedom along the axis (28), a ring (72) comprising an elastic material with fluid behaviour, the ring (72) comprising a central cavity (74) through which the cable (14) passes, **characterised in that** the device has
an actuator (76; 92) configured to compress the ring (72) between two shapes, in order to pass from a first of the shapes, referred to as the open shape, the cable (14) being able to run freely in the central cavity (74), to a second of the two shapes, referred to as the closed shape, the cable (14) being compressed by the ring (72).

2. The locking device according to claim 1, wherein the fixed part (112) of the clamp (70; 90) is connected to the object (20; 50) by means of at least one elastic element (114) configured to compress or to expand during clamping of the clamp (70; 90).

3. The locking device according to claim 2, wherein the elastic element (114) is configured to allow flexibility of the fixed part (112) with respect to the object (50) in a translational movement along the axis (28) and also in the other degrees of freedom.

4. The locking device according to one of claim 2 or 3, wherein the elastic element (114) is configured to convert most of a kinetic energy of the object (50) into potential energy in the deformation of the elastic element (114).

5. The locking device according to one of claims 2 to 4, wherein the elastic element (114) has damping properties, making it possible to dissipate the potential energy derived from the kinetic energy of the object (50).

6. The locking device according to one of the preceding claims, wherein the actuator (92) applies an axial force to the ring (72) along the axis (28) of the cable (14), which tends to reduce a length of the ring (72) along the axis (28) of the cable (14) to achieve the closed shape.

7. The locking device according to claim 6, comprising a rigid annulus (94) integral with the fixed part (112) and through which the cable (14) passes, the ring (72) bearing against one face (96) of the annulus (94), the face (96) being perpendicular to the axis (28) of the cable (14), the ring (72) being compressed between the annulus (94) and the actuator (92).

8. The locking device according to claim 7, wherein the face (96) of the annulus (94) is referred to as the first face, wherein the annulus (94) has a second face (100) opposite the first face (96), and wherein the second face (100) is chamfered around a hole (102) in the annulus (94), through which hole the cable (14) passes.

9. The locking device according to one of claim 7 or 8, wherein the actuator (92) moves the ring along the axis (28) of the cable (14) toward the annulus (94) to achieve the closed shape and away from the annulus (94) to achieve the open shape.

10. The locking device according to claim 9, wherein the actuator (92) comprises a screw-nut system (108, 110), of which a fixed part (108) is integral with the fixed part (112) of the clamp (90) and of which a moving part (110) is configured to compress the ring (72).

11. The locking device according to one of claims 6 to 10, comprising a rigid tube (112) extending along the axis (28) of the cable (14), the ring (72) being placed inside the tube (112), the tube (112) making it possible to limit the expansion of the ring (72) radially about the axis (28) of the cable (14).

12. The locking device according to claim 11, wherein the tube (112) is integral with the annulus (94).

13. The locking device according to one of claims 7 to 12 as a dependent claim of claim 7, wherein the annulus (94) is referred to as the first annulus (94), the device comprising a second annulus (104) through which the cable (14) passes and which is interposed between the actuator (92) and the ring (72).

14. The locking device according to claim 13, wherein the two annuli (94, 104) have holes (102, 106) centred about the axis (28) and through which the cable (14) passes, wherein, in its open shape, the central cavity (74) has a cross-section perpendicular to the axis (28) that is constant along the axis (28), and wherein the cross-sections of the holes (102, 106) have dimensions smaller than those of the cross-section of the central cavity (74).

15. The locking device according to one of claims 1 to 5, wherein the actuator (76) exerts a radial force on the ring (72) towards the axis (28) of the cable (14) to make the ring (72) pass from the open shape to the closed shape.

16. The locking device according to any one of the preceding claims, wherein the ring (72) has a solid shape surrounding the central cavity (74).
